# EUROPEAN PATENT SPECIFICATION

(11) **EP 1 491 378 B1**
(45) Date of publication and mention of the grant of the patent: **12.03.2008**
(21) Application number: 03715610.6
(22) Date of filing: 28.03.2003
(51) Int. Cl.: B60W 10/04

(54) **CONTROL DEVICE FOR HYBRID VEHICLE**
STEUERVORRICHTUNG FÜR HYBRIDFAHRZEUG
DISPOSITIF DE COMMANDE POUR VEHICULE HYBRIDE

(30) Priority: 29.03.2002 JP 2002094916
(43) Date of publication of application: 29.12.2004
(73) Proprietor: Nissan Diesel Motor Co., Ltd., Ageo-shi Saitama 362-8523 (JP)
(72) Inventor: NOTSU, Ikurou, Ageo-shi, Saitama 362-8523 (JP)
(74) Representative: Grünecker, Kinkeldey, Stockmair & Schwanhäusser Anwaltssozietät
(86) International application number: PCT/JP2003/003993
(87) International publication number: WO 2003/082619

(56) References cited:
- US-A- 5 495 912
- US-A- 6 007 443
- US-A- 6 020 697
- US-B1- 6 359 404

## Description

This invention relates to a control system for a hybrid vehicle according to the preamble portion of claim 1, equipped with an engine and a rotating electric machine (motor/generator) as a power source.

One of hybrid systems for vehicles is equipped with a transmission for changing speed of rotation of an input shaft and transferring the changed rotational speed from an output shaft to wheels, a clutch for engaging and disengaging between an output shaft of an engine and the input shaft of the transmission, a rotating electric machine serving as a motor and a generator, a power transmission mechanism (gear mechanism) for engaging the input/ output shaft of the rotating electric machine and the input shaft of the transmission, and an electric-storage element for storing electric power supplied to the rotating electric machine. Such a hybrid system for a vehicle is disclosed in Japanese Unexamined Patent Publication No. 2000-343965A.

In the hybrid system, a gear ratio of the power transmission mechanism for engaging the input/output shaft of the rotating electric machine and the input shaft of the transmission is fixed at a reduction gear ratio required for the rotating electric machine to produce torque necessary to start the vehicle moving. Hence, the rotational speed of the rotating electric machine in normal travel is determined in accordance with the vehicle speed at the time. Accordingly, a highly efficient range of the rotating electric machine cannot be possibly used. This is a disadvantage from the viewpoint of fuel consumption characteristics of the vehicle.

From US 6,359,404 B1 there is known a control system for a hybrid vehicle according to the preamble of claim 1.

It is an objective of the present invention to provide a control system for a hybrid vehicle as indicated above, which is equipped with a reduction-ratio variator for transmitting power between an input/output shaft of a rotating electric machine and an input shaft of a transmission by means of step-less speed change to make it possible to operate the rotating electric machine with efficiency.

This objective is solved in an inventive manner by a control system having the features of claim 1.

Accordingly, there is provided a hybrid vehicle with an engine and a rotating electric machine comprises a transmission that transmits an output rotation of the engine to drive wheels, a reduction-ratio variator interposed between the rotating electric machine and an input shaft of the transmission, an electric-storage element that stores electric power for supply to the rotating electric machine, and a control device for controlling an output of the rotating electric machine and the engine in accordance with vehicle operation conditions, and controlling a reduction ratio of the reduction-ratio variator. The control device controls a torque and a rotational speed of the rotating electric machine on the basis of an output required of the rotating electric machine to obtain optimum values based on the optimum characteristics of efficiency of the rotating electric machine. The control device concurrently controls a reduction ratio of the reduction-ratio variator in accordance with the vehicle speed at the time.

Accordingly, the present invention is capable of extending a range of a highly efficient operation of a rotating electric machine and improving fuel efficiency of a vehicle.

A preferred embodiment is laid down in dependent claim 2.

In the following, the present invention is explained in greater detail with; respect to several embodiments thereof in conjunction with the accompanying drawings, wherein:
Fig. 1 is a schematic diagram of a system in an embodiment according to the present invention,
Fig. 2 is a flowchart illustrating control contents, and
Fig. 3 is an output characteristic diagram showing an optimum efficiency line for a rotating electric machine.

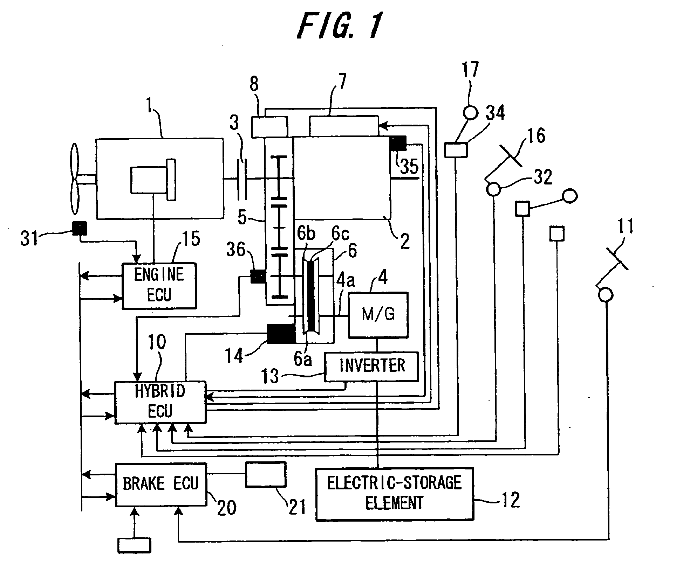

In Fig. 1, reference numeral 1 denotes an engine and 2 denotes a gear transmission automatically changing a transmission gear ratio. A friction clutch 3 is interposed between an engine output shaft and a transmission input shaft 2a. Drive wheels (not shown) are coupled via a differential gear to an output shaft of the transmission 2. Upon engagement of the clutch 3, the rotation of the engine 1 is transferred from the transmission 2 to the drive wheels of the vehicle.

A gear shift of the transmission 2 is controlled through a gear shift unit 7 by a hybrid electronic control unit 10 (hybrid ECU). The clutch 3 is controlled through a clutch actuator 8 by the hybrid ECU 10 for engagement/disengagement of power from the engine 1 to the transmission 2.

A diesel engine or a CNG engine (using compressed natural gas as fuel) is used as the engine 1.

An engine electronic control unit 15 (engine ECU) controls an amount of fuel supplied to the engine 1. The engine ECU 15 controls the amount of fuel supplied to the engine 1 in accordance with a rotational speed signal detected by an engine rotation sensor 31 and a request from the hybrid ECU 10.

Reference numeral 4 denotes a rotating electric machine (motor generator) of which an input/output shaft 4a is connected to a reduction-ratio variator 6 including the continuously variable transmission or the like. The reduction-ratio variator 6 is coupled to the input shaft of the transmission 2 through a power transmission mechanism 5.

The reduction-ratio variator 6 of the power transmission mechanism 5 includes a continuously variable transmission. A first pulley 6a is mounted on the input/output shaft 4a of the rotating electric machine 4. A second pulley 6b is mounted on a gear of the power transmission mechanism 5. The first pulley 6a and the second pulley 6b are coupled through a V belt 6c. Each of the first and second pulleys 6a and 6b can be varied in groove width by a reduction-ratio variable actuator 14. When the first pulley 6a is increased in groove width and the second pulley 6b is decreased, a reduction ratio increases, whereas when the first pulley 6a is decreased in groove width and the second pulley 6b is increased, a reduction ratio decreases.

The power transmission mechanism 5 is formed simply as a combination of a plurality of gears.

For the rotating electric machine 4, a permanent-magnet synchronous motor (IPM synchronous motor) is used in terms of high efficiency and reduction in size and weight. The rotating electric machine 4 is connected via an inverter 13 to an electric-storage element 12. For the electric-storage element 12 an electric double-layer capacitor is used, in which because brake energy is fully regenerated with high efficiency in a short time, output density required for the maximum mass of a battery of the vehicle is easily ensured.

The inverter 13 controls the rotating electric machine 4 to place it in either a motor mode or a generator mode in accordance with a request from the hybrid ECU 10. In the motor mode, a charging power (direct-current power) of the electric-storage element 12 is converted to an alternating-current power in order to drive the rotating electric machine 4, while in the generator mode, a generated power (alternating-current power) of the rotating electric machine 4 is converted to a direct-current power in order to charge the electric-storage element 12.

A brake actuator 21 is provided for allowing wheels to generate a braking force, and controlled by signals from a brake electronic control unit 20 (brake ECU). The brake ECU 20 determines a required brake force based upon a depressed amount of a brake pedal 11 during vehicle deceleration. During the deceleration time, the hybrid ECU 10 places the rotating electric machine 4 to the generator mode for regenerative power generation. When the regenerative braking force thus produced is lower than the required braking force, the brake ECU 20 operates the brake actuator 21 to generate braking force for compensating for this shortage.

The hybrid ECU 10 receives signals from an accelerator sensor 32 that detects a depressed amount of an accelerator pedal 16 (the required amount from the accelerator), a shift position sensor (not shown) that detects a gear position of the transmission 2, a lever position sensor 34 for a change lever 17, a vehicle speed sensor 35 that detects a rotational speed of an output end of the transmission 2 (an output rotation sensor of the transmission 2), a second-pulley rotation sensor 36 that detects a rotational speed of the second pulley 6b of the reduction-ratio variator 6 of the power transmission mechanism 5, and a device (not shown) for measuring a rotational speed (the rotation number) of the rotating electric machine 4.

Based on the above detected signals, information on a state of charge (SOC) of the electric-storage element 12, and various items of information sent from the engine ECU 15, brake ECU20 and inverter 11, the hybrid ECU 10 sends control signals to the engine ECU 15 and the brake ECU 20, and a command signal to the gear shift unit 7 of the transmission 2, while controlling the clutch actuator 8 of the clutch 3, the inverter 13 of the rotating electric machine 4, and the reduction-ratio variable actuator 14 of the reduction-ratio variator 6.

Note that when starting moving and driving the vehicle by use of only an output of the rotating electric machine 4, the hybrid ECU 10 maintains disengagement of the clutch 3, and controls the inverter 13 to obtain the output from the rotating electric element 4 in accordance with the required amount from the accelerator. At the same time, the hybrid ECU 10 controls a reduction ratio of the reduction-ratio variator 6 and the gear shift of the transmission 2.

When moving the vehicle by use of only an output of the engine 1, the hybrid ECU 10 sends a request to the engine ECU 15 (the engine ECU 15 controls the amount of fuel supplied to the engine 1 to obtain an output according to the required amount from the accelerator), and also controls the engagement of the clutch 3 and the gear shift of the transmission 2.

When moving the vehicle by use of both of an output of the rotating electric machine 4 and an output of the engine 1, the hybrid ECU 10 sends to the engine ECU 15 a signal requesting generation of an output corresponding to a quota assigned to the engine 1, and concurrently controls the inverter 13 to obtain an output corresponding to a quota assigned to the rotating electric machine 4. In addition, the hybrid ECU 10 controls a reduction ratio of the reduction-ratio variator 6, the engagement of the clutch 3 and the gear shift of the transmission 2.

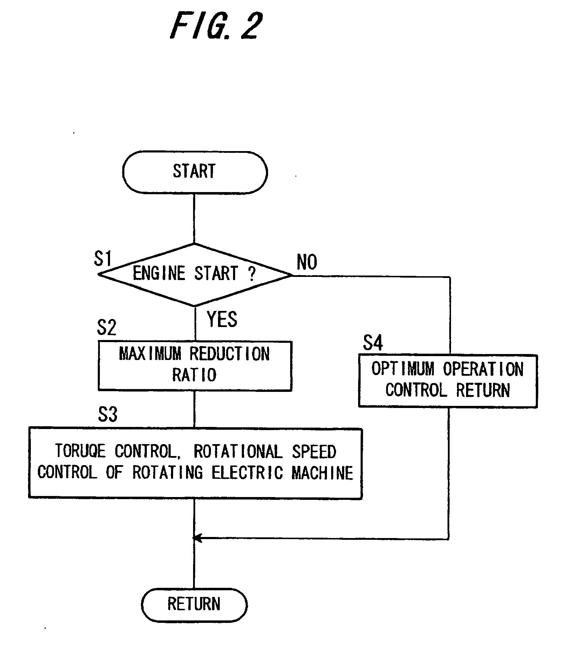

Next, with reference to the flowchart in Fig. 2, a description is given of the output of the rotating electric machine 4 and control contents of the reduction-ratio variator 6 performed by the hybrid ECU 10 when starting moving and driving the vehicle by use of only the output of the rotating electric machine 4, and use of both of the output of the rotating electric machine 4 and the output of the engine 1.

At step S1, it is determined whether or not the vehicle is in a moving-start (accelerating) state.

If the vehicle is in the moving-start state, the hybrid ECU 10 goes to step S2 to set the reduction-ratio variator 6 at a maximum reduction ratio, and then to step 3 to control driving torque of the rotating electric machine 4 at the maximum with respect to output required of the rotating electric machine 4 for acceleration, so that the rotational speed of the rotating electric machine 4 is controlled to increase.

When high starting acceleration torque is required such as at takeoff, the reduction ratio of the reduction-ratio variator 6 is increased, so that a torque inputted to the transmission 2 is increased. Thereby, the takeoff torque required is adequately provided.

Except for the vehicle moving-start state, that is, in a normal traveling state, the hybrid ECU 10 goes to step S4 to perform optimum operation control for operating the rotating electric machine 4 on the basis of an optimum efficiency line.

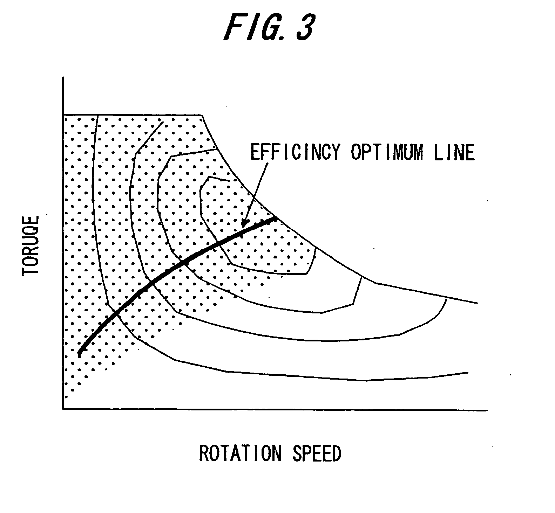

In this control, a driving torque and a rotational speed of the rotating electric machine 4 are controlled with respect to the output required of the rotating electric machine 4 such that the driving torque and the rotational speed of the rotating electric machine 4 match the optimum efficiency line on which the rotating electric machine 4 achieves optimum operation efficiency as shown in Fig. 3. Concurrently, a reduction ratio of the reduction-ratio variator 6 is controlled.

More specifically, when the rotating electric machine 4 generates the required driving torque, a reduction ratio of the reduction-ratio variator 6 is increased/decreased such that a current rotational speed of the rotating electric machine 4 is maintained on the optimum efficiency line. In a certain traveling state, if a vehicle speed and a change gear ratio of the transmission 2 are determined, a rotational speed required of the rotating electric machine 4 is also determined. However, the determined rotational speed is not always within the highest efficient operation conditions of the rotating electric machine 4. In this case, the rotational speed of the rotating electric machine 4 is changed to enter the highest efficiency conditions, and with this change of the rotational speed, the reduction ratio of the reduction-ratio variator 6 is changed so as to retain the same vehicle speed at this time.

In this manner, by means of control of the reduction ratio of the reduction-ratio variator 6 to allow the rotating electric machine 4 to operate at a rotational speed in conditions as efficiently as possible, it is possible to extend a range in which the rotating electric machine 4 is able to be operated with high efficiency, which in turn reduces the load on the engine 1, resulting in an improvement in fuel consumption characteristics of the vehicle.

Note that when decelerating the vehicle, the rotating electric machine 4 is placed in a generator mode. More specifically, the rotating electric machine 4 is functioned as a generator to use deceleration energy owned by the vehicle to achieve regenerative power generation. The resulting electric power is stored in the electric-storage element 12. In this case, similarly, the reduction ratio of the reduction-ratio variator 6 is controlled in accordance with a current request of speed reduction so as to retain a rotational speed at which the efficiency of power generation is high as much as possible.

The control system for a hybrid vehicle is capable of being used in various types of vehicles such as a truck, an automobile and the like.

## Claims

1. A control system for a hybrid vehicle with an engine (1) and a rotating electric machine (4), comprising:
a transmission (2) that is interposed between the engine (1) and drive wheels of the vehicle;
a reduction-ratio variator (6) that is interposed between the rotating electric machine (4) and an input shaft of the transmission (2);
an electric-storage element (12) that stores electric power for supply to the rotating electric machine (4), and
a control device (10) for controlling an output of the engine and the rotating electric machine in accordance with vehicle operation conditions, and controlling a reduction ratio of the reduction-ratio variator,
**characterized in that**
the electric-storage element is electric double-layer capacitor,
the reduction ratio variator is a continuously variable transmission (6) which is coupled to the input shaft of the transmission (2) through a power transmission mechanism (5), and
the control device controls a torque and a rotational speed of the rotating electric machine on the basis of an output required of the rotating electric machine to obtain optimum values based on the optimum characteristics of efficiency of the rotating electric machine, and concurrently controls the reduction ratio of the continuously variable transmission in accordance with a vehicle speed at the time, and
the control device, when the vehicle is decelerated, allows the rotating electric machine to operate as a generator and controls the reduction ratio of the continuously variable transmission to obtain a rotational speed of the rotating electric machine with high efficiency of electric-power generation.

2. The control system for a hybrid vehicle according to claim 1, **characterized in that** the control device controls the reduction ratio of the reduction-ratio variator to maximum when the vehicle starts and is accelerated.

## Patentansprüche

1. Steuerungssystem für ein Hybridfahrzeug mit einem Motor (1) und einer rotierenden elektrischen Maschine (4), aufweisend:
ein Getriebe (2), das zwischen den Motor (1) und die Antriebsräder des Fahrzeuges eingesetzt ist;
eine Untersetzungsverhältnis- Veränderungseinrichtung (6), die zwischen der rotierenden elektrischen Maschine (4) und einer Eingangswelle des Getriebes (2) eingesetzt ist;
ein elektrisches Speicherelement (12), das Elektroenergie zur Zuführung zu der rotierenden elektrischen Maschine (4) speichert, und
eine Steuerungsvorrichtung (10) zum Steuern einer Ausgangsleistung des Motors und der rotierenden elektrischen Maschine in Übereinstimmung mit den Fahrzeugbetriebsbedingungen und zum Steuern eines Untersetzungsverhältnisses der Untersetzungsverhältnis- Veränderungseinrichtung (6),
**dadurch gekennzeichnet, dass**
das elektrische Speicherelement ein elektrischer Doppelschicht- Kondensator ist, wobei die Untersetzungsverhältnis- Veränderungseinrichtung ein stufenlos veränderbares Getriebe (6) ist, das mit der Eingangswelle des Getriebes (2) durch eine Leistungsübertragungsvorrichtung (5) gekuppelt ist, und
die Steuerungsvorrichtung ein Drehmoment und eine Drehzahl der rotierenden elektrischen Maschine steuert, auf der Grundlage eines Ausgangssignals, das für die rotierende elektrische Maschine erforderlich ist, um optimale Werte auf der Grundlage der optimalen Wirkungsgradmerkmale der rotierenden elektrischen Maschine zu erhalten und gleichzeitig das Untersetzungsverhältnis des stufenlos veränderbaren Getriebes in Übereinstimmung mit der Fahrzeuggeschwindigkeit zu der Zeit steuert, und
die Steuerungsvorrichtung, wenn das Fahrzeug abgebremst wird, der rotierenden elektrischen Maschine gestattet, als ein Generator zu arbeiten und das Untersetzungsverhältnis des stufenlos veränderbaren Getriebes steuert, um eine Drehzahl der rotierenden elektrischen Maschine mit hohem Wirkungsgrad der Elektroenergieerzeugung zu erhalten.

2. Steuerungssystem für ein Hybridfahrzeug nach Anspruch 1, **dadurch gekennzeichnet, dass** die Steuerungsvorrichtung das Untersetzungsverhältnis der Untersetzungsverhältnis- Veränderungseinrichtung auf ein Maximum steuert, wenn das Fahrzeug gestartet und beschleunigt wird.

## Revendications

1. Système de commande pour un véhicule hybride avec un moteur (1) et une machine électrique tournante (4), comprenant:
une transmission (2) qui est interposée entre le moteur (1) et les roues motrices du véhicule;
un variateur de rapport de réduction (6) qui est interposé entre la machine électrique rotative (4) et un arbre d'entrée de la transmission (2);
un élément de stockage électrique (12) qui stocke la puissance électrique pour l'amener à la machine électrique tournante (4), et
un dispositif de commande (10) pour commander une sortie du moteur et de la machine électrique tournante en accord avec des conditions de fonctionnement du véhicule, et commandant un rapport de réduction du variateur de rapport de réduction,
**caractérisé en ce que**
l'élément de stockage électrique est un condensateur électrique à couche double,
le variateur du rapport de réduction est une transmission (6) variable en continu qui est couplée à l'arbre d'entrée de la transmission (2) par un mécanisme de transmission de puissance (5), et
le dispositif de commande commande un couple et une vitesse de rotation de la machine électrique rotative sur la base d'une sortie requise de la machine électrique rotative pour obtenir des valeurs optimales basées sur les caractéristiques d'efficacité optimales de la machine électrique rotative et commande en même temps le rapport de réduction de la transmission variable en continu en accord avec la vitesse du véhicule à ce moment, et
le dispositif de commande, lorsque le véhicule est ralenti, permet à la machine électrique tournante de fonctionner comme générateur et commande le rapport de réduction de la transmission variable en continu afin d'obtenir une vitesse de rotation de la machine électrique rotative avec une efficacité élevée de génération de puissance électrique.

2. Système de commande pour un véhicule hybride selon la revendication 1, **caractérisé en ce que** le dispositif de commande commande le rapport de réduction du variateur de rapport de réduction au maximum lorsque le véhicule démarre et est accéléré.
